# FASCICULE DE BREVET EUROPEEN

(11) **EP 4 040 642 B1**
(45) Date de publication et mention de la délivrance du brevet: **14.08.2024**
(21) Numéro de dépôt: 22153114.8
(22) Date de dépôt: 25.01.2022
(51) Int. Cl.: H02K 1/20, H02K 5/20, H02K 9/06, H02K 9/08, H02K 9/16

(54) **MOTEUR FERMÉ REFROIDI PAR VENTILATEUR, AMÉLIORÉ PAR SYMÉTRISATION**
DURCH SYMMETRISIERUNG VERBESSERTER GESCHLOSSENER LÜFTERGEKÜHLTER MOTOR
CLOSED ENGINE COOLED BY FAN, IMPROVED BY MAKING IT SYMMETRIC

(30) Priorité: 26.01.2021 FR 2100704
(43) Date de publication de la demande: 10.08.2022
(73) Titulaire: ALSTOM Holdings, 93400 Saint-Ouen-sur-Seine (FR)
(72) Inventeur: BERKANI, Mohamed-Said, 25000 BESANCON (FR); FAKAM TCHAKOUE, Mathias, 25410 ROUTELLE (FR); RANDRIA, Andry-Mamy, 25000 BESANCON (FR); SCHERER, Michel, 25320 GRANDFONTAINE (FR); SOUGH, Mohamed-Laid, 25320 TORPES (FR)
(74) Mandataire: Lavoix

(56) Documents cités:
- JP-A- 2004 312 875
- JP-A- 2008 220 054
- US-A1- 2004 150 270
- US-A1- 2012 062 057

## Description

La présente invention concerne un moteur fermé refroidi par ventilateur du type comprenant : un arbre, qui définit un axe longitudinal du moteur ; à l'intérieur d'un volume fermé délimité axialement par des première et seconde cloisons transversales et radialement par une paroi axiale constitutive d'une carcasse du moteur, un stator, solidaire de la paroi axiale, et un rotor, solidaire de l'arbre ; et, à l'extérieur du volume fermé, un réseau de canaux, qui circulent sur ou dans la paroi axiale, et un ventilateur, qui est agencé sur un côté extérieur de la première cloison transversale, qui est monté sur l'arbre et qui fait circuler de l'air de refroidissement dans le réseau de canaux pour refroidir le stator.

Le document EP 2 600 504 A1 divulgue un moteur fermé refroidi par ventilateur du type précité.

Or, les moyens de refroidissement externe de ce moteur de l'état de la technique, qui sont constitués du ventilateur et du réseau de canaux, conduisent à la présence d'un fort gradient axial de température à travers le moteur et, en particulier, à travers le stator. En effet, l'air frais refoulé dans les canaux par le ventilateur se réchauffe progressivement à mesure qu'il se déplace à travers lesdits canaux en collectant la chaleur du stator. L'air perd par conséquent son efficacité de refroidissement à mesure qu'il se déplace. De ce fait, la portion du stator à proximité du ventilateur est mieux refroidie que la portion du stator à l'écart du ventilateur. Il y donc établissement d'un gradient de température qui s'établit à travers le stator. Ceci n'est pas adapté à un fonctionnement optimal du moteur.

Par ailleurs, le document JP 2004 312875 A divulgue un moteur fermé refroidi par ventilateur, du type comprenant : un arbre, qui définit un axe longitudinal du moteur ; à l'intérieur d'un volume fermé délimité axialement par des première et seconde cloisons transversales et radialement par une paroi axiale constitutive d'une carcasse du moteur, un stator, solidaire de la paroi axiale, et un rotor, solidaire de l'arbre ; et, à l'extérieur du volume fermé, un réseau de canaux, qui circulent sur ou dans la paroi axiale, et un ventilateur, qui est agencé sur un côté extérieur de la première cloison transversale, qui est monté sur l'arbre et qui fait circuler de l'air de refroidissement dans le réseau de canaux pour refroidir le stator, le ventilateur et le réseau de canaux étant un premier ventilateur et une premier réseau de canaux, ledit moteur comporte, en outre, à l'extérieur du volume fermé, un second réseau de canaux, qui circulent sur ou dans de la paroi axiale, et un second ventilateur, qui est agencé sur un côté extérieur de la seconde cloison transversale, qui est monté sur l'arbre et qui fait circuler de l'air de refroidissement dans le second réseau de canaux pour refroidir le stator.

Le document US 2012/062057 A1 divulgue un moteur comportant, à droite, un premier ventilateur et, à gauche, un second ventilateur, ce dernier ne faisant pas circuler l'air dans des canaux.

Le document US 2004/150270 A1 décrit un ventilateur réalisé en aluminium.

Le but de la présente invention est de résoudre ce problème.

Pour cela, l'invention a pour objet un moteur tel que défini par les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 représente deux demi-sections axiales d'un moteur selon un premier mode de réalisation de l'invention ;
- La figure 2 représente deux demi-sections axiales d'un moteur selon un second mode de réalisation de l'invention ; et,
- La figure 3 est une coupe transversale dans un plan médian aussi bien du moteur de la figure 1 que de celui de la figure 2.

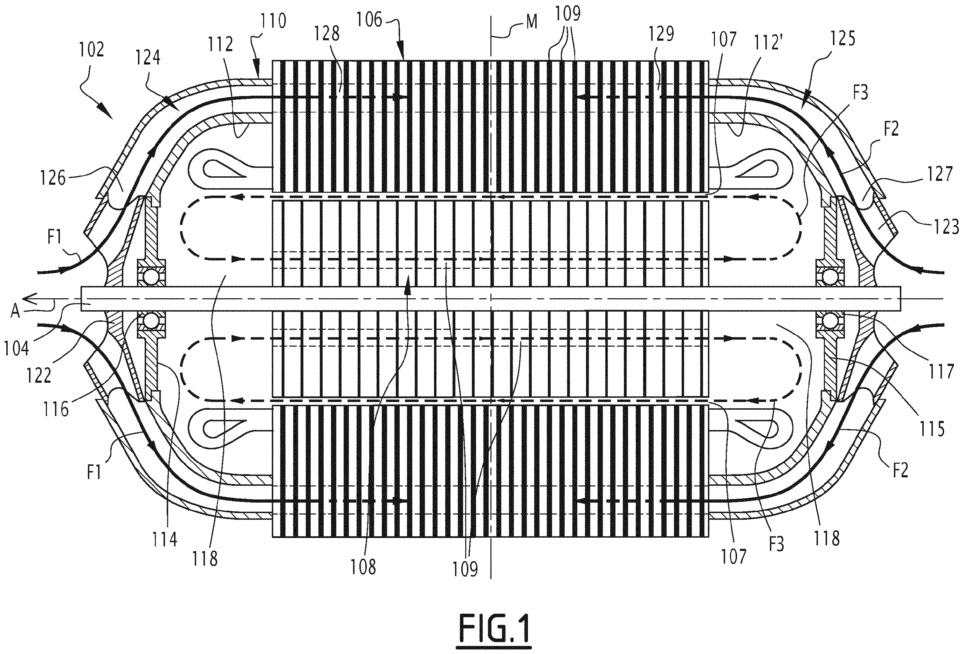

En se référant à la figure 1, un premier mode de réalisation d'un moteur fermé refroidi par ventilateur selon l'invention va être présenté.

Le moteur 102 est un moteur électrique propre à convertir une puissance électrique en une puissance mécanique.

Il comporte un arbre 104 s'étendant selon un axe longitudinal A. L'arbre est traversant. En variante, il pourrait s'agir d'un demi-arbre.

L'axe A est un axe de rotation pour les pièces tournantes du moteur 102.

Le moteur 102 comporte un stator 106, fixe, et un rotor 108, qui est solidaire de l'arbre 104.

Le moteur 102 comporte une carcasse 110.

La carcasse 110 est constituée d'une paroi axiale, d'un premier flasque 114 et d'un second flaque 115.

La paroi axiale est de forme sensiblement cylindrique autour de l'axe A. Dans le mode de réalisation de la figure 1, la paroi axiale est constituée du stator 106 monté entre une première portion d'extrémité de paroi axiale 112 et une seconde portion d'extrémité de paroi axiale 112'.

En variante, le stator est fixé sur une surface intérieure d'une portion centrale de la paroi axiale.

Les premier et second flasques, 114 et 115, disposés transversalement à l'axe A, obturent les extrémités ouvertes respectivement de la première portion d'extrémité de paroi axiale 112 et de la seconde portion d'extrémité de paroi axiale 112'.

La carcasse 110 est fixe. Elle est couplée à l'arbre 104 par des paliers, respectivement un premier palier 116 entre le premier flasque 114 et l'arbre 104 et un second palier 117 entre le second flasque 115 et l'arbre 104.

Le moteur 102 est fermé, c'est-à-dire que l'ensemble rotor - stator est placé à l'intérieur d'un volume fermé 118.

Dans le mode de réalisation de la figure 1, le volume fermé 118 est délimité, radialement, par la paroi axiale et, longitudinalement, par les premier et second flasques, 114 et 115. Les premier et second flasques sont donc fermés.

L'air, ou tout autre fluide gazeux, enfermé dans le volume 118 est chauffé par les pertes magnétiques de l'ensemble rotor - stator.

Avantageusement, pour permettre une certaine circulation de l'air à l'intérieur du volume fermé 118, des canaux 109 sont ménagés à travers le rotor 108. De la sorte, une circulation d'air est possible à travers les canaux 109 et l'entrefer 107, entre le stator 106 et le rotor 108. Cette circulation est représentée par les flèches F3 sur la figure 1.

Pour le refroidissement du stator 106, le moteur 102 est équipé de moyens de refroidissement externe au volume fermé 118, comportant des premiers moyens de refroidissement, sur un premier côté axial du moteur, et des seconds moyens de refroidissement, sur un second côté axial du moteur.

Les premiers moyens de refroidissement comportent un premier ventilateur 122, solidaire de l'arbre 104, et placé, dans ce premier mode de réalisation, à l'extérieur de la carcasse 110. Plus précisément, le premier ventilateur 122 est du côté extérieur du premier flasque 114 par rapport au volume fermé 118.

Les premiers moyens de refroidissement comportent, associés au premier ventilateur 122, un premier réseau de canaux 124 prévus dans l'épaisseur de la paroi axiale.

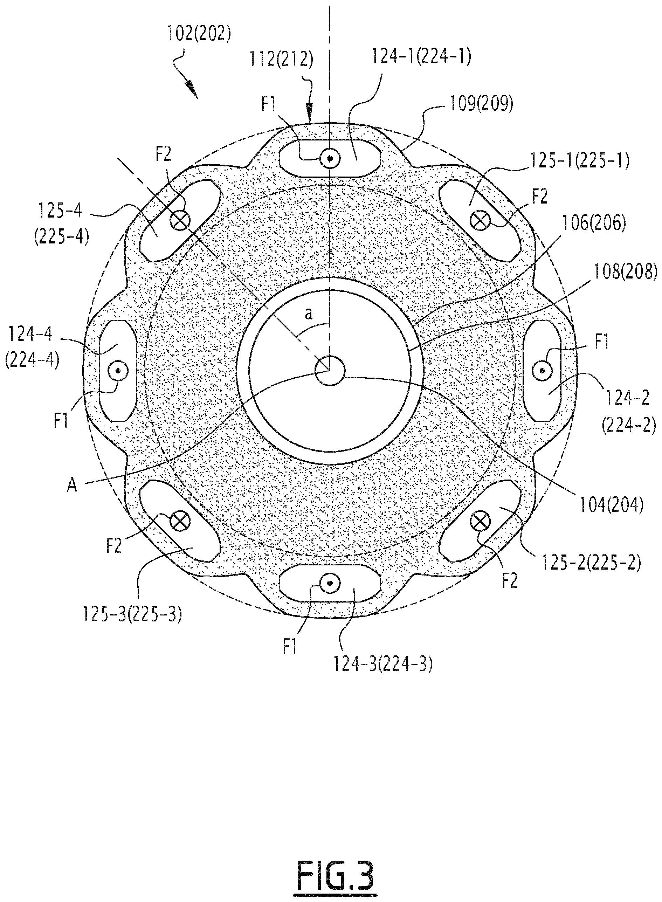

Le premier réseau de canaux 124 comporte une pluralité de N canaux 124-i (figure 3), où l'indice i est un entier entre 1 et N. Par exemple N est égal à quatre. En variante, un nombre différent de canaux pourrait être mis en oeuvre.

Un canal comporte successivement une portion d'entrée 126, qui est coudée dans un plan axial, et une portion principale 128, qui est sensiblement rectiligne et disposée parallèlement à l'axe A. L'extrémité proximale ouverte de la portion d'entrée 126 est reliée fluidiquement avec le premier ventilateur 122. L'extrémité distale ouverte de la portion principale 128 est avantageusement associée fluidiquement à un moyen formant écope, de manière à rejeter l'air chaud à l'écart du moteur.

Les premiers moyens de refroidissement, qui sont prévus du côté gauche du moteur 102 sur la figure 1, permettent une circulation d'air selon les flèches F1, orientées de gauche à droite sur la figure 1 et vers l'avant du plan de la figure 3.

La mise en rotation du premier ventilateur 122 par l'arbre 104 permet l'aspiration d'air frais, extérieur au moteur 102, et le refoulement de l'air ainsi aspiré dans la portion d'entrée 126 de chacun des canaux 124-i du premier réseau 124. L'air admis circule ensuite à l'intérieur de la portion principale 128 de chacun des canaux 124-i du premier réseau 124 de manière à refroidir le stator 106. La température de l'air augmente au fur et à mesure de son déplacement axial le long du stator 106 en captant la chaleur de ce dernier. Enfin, l'air chaud est éjecté dans l'environnement, avantageusement à l'écart du moteur 102.

Symétriquement par rapport à un plan médian M du moteur 102, les seconds moyens de refroidissement comportent un second ventilateur 123, solidaire de l'arbre 104 et placé, dans ce premier mode de réalisation, à l'extérieur de la carcasse 110. Plus précisément, le second ventilateur 123 est du côté extérieur du second flasque 115 par rapport au volume fermé 118.

Les seconds moyens de refroidissement comportent, associés au second ventilateur 123, un second réseau de canaux 125 prévus dans l'épaisseur de la paroi axiale.

Le second réseau de canaux 125 comporte une pluralité de N canaux 125-i (figure 3), où l'indice i est un entier entre 1 et N. Par exemple N est égal à quatre. De préférence, le nombre de canaux du second réseau 125 est égal au nombre de canaux du premier réseau 124, mais pourrait être différent.

Un canal comporte successivement une portion d'entrée 127, qui est coudée dans un plan axial, et une portion principale 129, qui est sensiblement rectiligne et disposée parallèlement à l'axe A. L'extrémité proximale ouverte de la portion d'entrée 127 est reliée fluidiquement au second ventilateur 123. L'extrémité distale ouverte de la portion principale 125 est avantageusement associée fluidiquement à un moyen formant écope.

Les seconds moyens de refroidissement, qui sont prévus du côté droit du moteur 102 sur la figure 1, permettent une circulation d'air selon les flèches F2, orientées de droite à gauche sur la figure 1 et vers l'arrière du plan de la figure 3.

La mise en rotation du second ventilateur 123 par l'arbre 104 permet l'aspiration d'air frais, extérieur au moteur 102, et le refoulement de l'air ainsi aspiré dans la portion d'entrée 123 de chacun des canaux 125-i du second réseau 125. L'air admis circule ensuite à l'intérieur de la portion principale 129 de chacun des canaux 125-i du second réseau 125 de manière à refroidir le stator 106. La température de l'air augmente au fur et à mesure de son déplacement axial le long du stator 106, en captant la chaleur de ce dernier. Enfin, l'air chaud est éjecté dans l'environnement, avantageusement à l'écart du moteur 102.

Ainsi, en symétrisant, par rapport au plan transversal médian M, deux flux F1 et F2 de fluide de refroidissement sont créés, qui circulent longitudinalement à travers le stator 206 dans des sens opposés. Cela permet de réduire le gradient de température entre les extrémités longitudinales du stator 106. Le refroidissement du stator 106 est amélioré puisque la température du stator est plus homogène.

La figure 3 est une coupe dans le plan médian M du moteur 102, permettant d'illustrer l'agencement relatif des canaux, respectivement 124-1, 124-2, 124-3, 124-4 et 125-1, 125-2, 125-3, 125-4, des premier et second réseaux de canaux, 124 et 125.

Les premier et second réseaux de canaux 124 et 125 sont indépendants l'un de l'autre.

Pour standardiser les pièces constitutives du moteur 102 et faciliter l'assemblage, les premier et second réseaux 124 et 125 sont identiques entre eux, mais disposés sur la carcasse 110 de manière à être décalés angulairement l'un par rapport à l'autre autour de l'axe A. Puisque le nombre de canaux par réseau est ici de quatre, le second réseau 125 est tourné d'un angle a valant 45° par rapport au premier réseau 124. C'est la raison pour laquelle sur la figure 1, on a représenté deux demi-sections selon des plans axiaux, de part et d'autre du plan médian M : la demi-section correspondant à la partie droite du moteur étant ramenée dans le plan axial de la demi-section correspondant à la partie gauche du moteur par pivotement de 45° autour de l'axe A. Que les moyens de refroidissement externe soient symétriques doit donc s'entendre moyennant ce décalage entre les premier et second moyens de refroidissement externe.

Par exemple, dans ce premier mode de réalisation, le stator 106 est un stator feuilleté, qui comporte un empilement de tôles identiques.

Comme représenté sur la figure 3, chaque tôle 109 est inscrite dans un cercle.

Chaque tôle 109 présente extérieurement des échancrures de sorte que, lorsque les tôles sont empilées axialement les unes à la suite des autres, l'empilement obtenu présente des encoches longitudinales de réception des bobines.

Chaque tôle 109 est munie, à proximité de sa périphérie, de préférence entre deux échancrures successives, d'une pluralité d'orifices de ventilation. Chaque tôle 109 comporte 2xN orifices de ventilation, répartis annulairement de manière uniforme. Deux orifices successifs sont ainsi décalés d'un angle a.

Lorsque les tôles sont empilées axialement les unes à la suite des autres, l'empilement obtenu présente une pluralité de canaux longitudinaux. Chaque orifice d'une tôle correspond ainsi à une section transversale d'un canal du réseau de canaux. Les orifices pairs forment les canaux 125-i du second réseau de canaux 125, tandis que les orifices impairs définissent les canaux 124-i du premier réseau de canaux 124.

La première portion d'extrémité de paroi axiale 112, respectivement la seconde portion d'extrémité de paroi axiale 112', est munie de N trous qui se connectent respectivement à un canal sur deux de l'empilement de tôles. Les trous de la première portion 112 se connectent par exemple aux orifices impairs, tandis que les trous de la seconde portion 112' se connectent aux orifices pairs des tôles.

Les première et seconde portions de paroi axiale 112 et 112', qui sont de préférence identiques entre elles, sont donc tournées de l'angle a l'une par rapport à l'autre pour orienter les flux d'air sur les canaux dit impairs 124 ou les canaux dits pairs 125.

Dans ce mode de réalisation, chaque canal s'étend longitudinalement. En variante, les canaux pourraient circuler de manière différente dans ou sur la carcasse du moteur. Par exemple, chaque canal pourrait être conformé en hélice.

L'homme du métier saura comment adapter la forme des tôles et leur assemblage pour construire des réseaux de canaux avec un nombre différents de canaux et/ou des formes de canaux différentes.

En variante, le stator étant fixé sur une surface intérieure d'une portion centrale de la paroi axiale, ladite portion centrale est usinée de manière à présenter, dans son épaisseur, les canaux des réseaux de canaux.

Avantageusement, la paroi axiale est réalisée par l'assemblage de deux demi-coques, convenablement usinées pour former les canaux une fois assemblées. Ces deux demi-coques sont avantageusement identiques.

Dans encore une autre variante, les réseaux de canaux sont rapportés sur la carcasse du moteur.

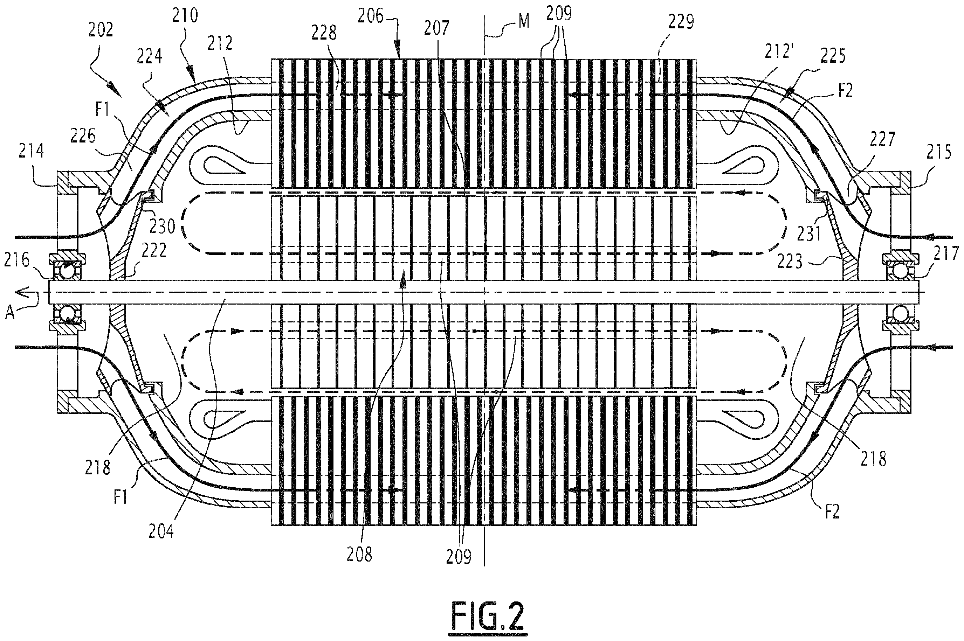

La figure 2 représente un second mode de réalisation du moteur selon l'invention. Un élément du second mode de réalisation identique ou similaire à un élément correspondant du premier mode de réalisation sera référencé par un chiffre de référence égal au chiffre de référence utilisé pour référencer cet élément correspondant augmenté d'une centaine.

Le moteur 202 comporte un arbre 204 monté rotatif autour d'un axe A.

Le moteur 202 comporte un stator 206, fixe, et un rotor 208 solidaire de l'arbre 204.

Le moteur 202 comporte une carcasse 210, qui est constituée d'une paroi axiale (résultant de l'assemblage d'une première portion d'extrémité 212, du stator, et d'une seconde portion d'extrémité 212'), d'un premier flasque 214 et d'un second flaque 215.

La carcasse 210 est fixe. Elle est couplée à l'arbre 104 par des paliers, respectivement un premier palier 216 entre le premier flasque 214 et l'arbre 204 et un second palier 217 entre le second flasque 215 et l'arbre 204.

Le moteur 202 est fermé, c'est-à-dire que l'ensemble rotor - stator est placé à l'intérieur d'un volume fermé 218 à l'intérieur de la carcasse 210.

Pour le refroidissement du stator 206, le moteur 202 est équipé de moyens de refroidissement externe au volume fermé 218, comportant des premiers moyens de refroidissement sur un premier côté axial du moteur et des seconds moyens de refroidissement sur un second côté axial du moteur, opposé au premier côté.

Les premiers moyens de refroidissement comportent un premier ventilateur 222 solidaire de l'arbre 204 et placé, dans ce second mode de réalisation, à l'intérieur de la carcasse 210. Plus précisément, le second ventilateur 222 est du côté intérieur du premier flasque 214 par rapport au volume fermé 218.

Les premiers moyens de refroidissement comportent, associés au premier ventilateur 222, un premier réseau de canaux 224 prévus dans l'épaisseur de la paroi axiale.

Le premier réseau de canaux 224 comporte une pluralité de N canaux, 224-i (sur la figure 3).

Un canal comporte successivement une portion d'entrée 226, de préférence coudée, et une portion principale 128, de préférence sensiblement rectiligne et disposée parallèlement à l'axe A. L'extrémité proximale ouverte de la portion d'entrée 226 est reliée fluidiquement au premier ventilateur 222. L'extrémité distale ouverte de la portion principale 228 est avantageusement associée fluidiquement à un moyen formant écope.

Les premiers moyens de refroidissement, qui sont prévus du côté gauche du moteur 202 sur la figure 2, permettent une circulation d'air selon les flèches F1, orientées de gauche à droite sur cette figure.

La mise en rotation du premier ventilateur 222 permet l'aspiration d'air frais, extérieur au moteur 202, et le refoulement de l'air ainsi aspiré dans la portion d'entrée 226 de chacun des canaux du premier réseau 224. L'air admis circule ensuite à l'intérieur de la portion principale 228 de chacun des canaux du premier réseau 224 de manière à refroidir le stator 206. La température de l'air augmente au fur et à mesure de son déplacement le long du stator 206 en captant la chaleur de ce dernier. Enfin, l'air chaud est éjecté dans l'environnement, avantageusement à l'écart du moteur 102, par les moyens formant écope.

Symétriquement par rapport à un plan médian M du moteur 202, les seconds moyens de refroidissement comportent un second ventilateur 223, solidaire de l'arbre 204 et placé, dans ce second mode de réalisation, à l'intérieur de la carcasse 210. Plus précisément, le second ventilateur 223 est du côté intérieur du second flasque 215 par rapport au volume fermé 218.

Les seconds moyens de refroidissement comportent, associés au second ventilateur 223, un second réseau de canaux 225 prévus dans l'épaisseur de la paroi axiale.

Le second réseau de canaux 225 comporte une pluralité de N canaux, 225-i (sur la figure 3).

Un canal comporte successivement une portion d'entrée 227, coudée, et une portion principale 229, qui est sensiblement rectiligne et disposée parallèlement à l'axe A. L'extrémité proximale ouverte de la portion d'entrée 227 est reliée fluidiquement au second ventilateur 223. L'extrémité distale ouverte de la portion principale 229 est avantageusement associée fluidiquement à un moyen formant écope.

Les seconds moyens de refroidissement, qui sont prévus du côté droit du moteur 202 sur la figure 2, permettent une circulation d'air selon les flèches F2, orientées de droite à gauche sur cette figure.

La mise en rotation du second ventilateur 222 permet l'aspiration d'air frais, extérieur au moteur 202, et le refoulement de l'air ainsi aspiré dans la portion d'entrée 227 de chacun des canaux du second réseau 225. L'air admis circule ensuite à l'intérieur de la portion principale 229 de chacun des canaux du second réseau 225 de manière à refroidir le stator 206. La température de l'air augmente au fur et à mesure de son déplacement le long du stator 206 en captant la chaleur de ce dernier. Enfin, l'air chaud est éjecté dans l'environnement, avantageusement à l'écart du moteur 202, par les moyens formant écope.

Ainsi, des flux F1 et F2 d'air sont établis dans des sens opposés à travers le stator 206 avec pour effet de réduire le gradient axial de température à travers ce dernier, et par conséquent à travers le moteur.

Dans le mode de réalisation de la figure 2, le volume fermé 218 est ainsi délimité, radialement, par la paroi axiale et, longitudinalement, par les premier et second ventilateurs, 222 et 223.

Les premier et second flasques, 214 et 215, prévus respectivement à l'écart des premier et second ventilateurs, 222 et 223, par rapport au plan médian M, sont donc munis d'ouvertures pour permettre le passage d'air extérieur au moteur 202 vers les premier et second ventilateurs, 222 et 223.

Pour le montage de l'arbre 204 et de la carcasse 210, la paroi axiale est donc prolongée axialement, au-delà du premier ventilateur 222 et du second ventilateur 223, pour recevoir les premier et second flasques, 214 et 215.

Avantageusement, les premier et second ventilateurs, 222 et 223, sont réalisés en un matériau bon conducteur thermique. Ils sont par exemple réalisés en aluminium.

Les premier et second ventilateurs, 222 et 223, constituent des parois dites froides, qui favorisent l'échange de chaleur par conduction entre l'extérieur du volume fermé 218 et l'intérieur du volume fermé 218, c'est-à-dire l'échange de chaleur entre l'air chaud bloqué à l'intérieur du volume 218 et l'air frais extérieur au moteur aspiré par les ventilateurs.

Dans ce second mode de réalisation, l'interface 230, respectivement 231, entre la carcasse 210, fixe, et le premier ventilateur 222, respectivement le second ventilateur 223, mobile en rotation, est adaptée pour assurer l'étanchéité du volume fermé 218. Le terme étanchéité est ici à comprendre au sens large d'une interface permettant d'éviter l'introduction de poussière et de saleté à l'intérieur du volume fermé 218.

Comme pour le premier mode de réalisation, les premier et second réseaux 224 et 225 sont identiques entre eux, mais sont implantés sur la carcasse 210 du moteur 202 de manière à être décalés angulairement l'un par rapport à l'autre, dans un plan transversal à l'axe A.

La description faite de la figure 3 en relation avec le premier mode de réalisation pourrait être reprise à l'identique pour le cas du second mode de réalisation.

## Revendications

1. Moteur fermé refroidi par ventilateur (202), du type comprenant : un arbre (204), qui définit un axe (A) longitudinal du moteur ; à l'intérieur d'un volume fermé (218) délimité axialement par des première et seconde cloisons transversales et radialement par une paroi axiale (212) constitutive d'une carcasse (210) du moteur, un stator (206), solidaire de la paroi axiale, et un rotor (208), solidaire de l'arbre ; et, à l'extérieur du volume fermé (218), un réseau de canaux (224), qui circulent sur ou dans la paroi axiale, et un ventilateur (222), qui est agencé sur un côté extérieur de la première cloison transversale, qui est monté sur l'arbre et qui fait circuler de l'air de refroidissement dans le réseau de canaux pour refroidir le stator, le ventilateur et le réseau de canaux étant un premier ventilateur et une premier réseau de canaux, ledit moteur (202) comporte, en outre, à l'extérieur du volume fermé (218), un second réseau de canaux (223), qui circulent sur ou dans de la paroi axiale, et un second ventilateur (225), qui est agencé sur un côté extérieur de la seconde cloison transversale, qui est monté sur l'arbre et qui fait circuler de l'air de refroidissement dans le second réseau de canaux pour refroidir le stator, **caractérisé en ce que** les première et seconde cloisons transversales sont respectivement constituées par les premier et second ventilateurs (222, 223), **en ce que** les canaux des premier et second réseaux de canaux circulent à travers le stator (206), et **en ce que** le moteur est symétrique par rapport à un plan médian (M) transversal à l'axe (A) du moteur, de manière à créer deux flux (F1, F2) de fluide de refroidissement qui circulent longitudinalement à travers le stator (206) dans des sens opposés.

2. Moteur selon la revendication 1, dans lequel le moteur (202) comporte, en outre, des premier et second flasques (214, 215), un flasque étant solidaire de la paroi axiale (212) et couplé à l'arbre (204) par l'intermédiaire de roulements (216, 217), un flasque étant situé au-delà d'un ventilateur par rapport au volume fermé (218) et comportant des ouvertures de manière à permettre l'aspiration d'air par ledit ventilateur.

3. Moteur selon l'une quelconque des revendications précédentes, dans lequel les premier et second ventilateurs (222, 223) sont en aluminium.

4. Moteur selon l'une quelconque des revendications précédentes, dans lequel les canaux des premier et second réseaux de canaux (224, 225) circulent axialement, le long de la paroi axiale (212).

5. Moteur selon la revendication 4, dans lequel les canaux du premier réseau de canaux (224), respectivement du second réseau de canaux (225), sont espacés annulairement de manière régulière sur la paroi axiale (212), chaque canal du premier réseau de canaux étant intercalé entre deux canaux du second réseau de canaux.

6. Moteur selon l'une quelconque des revendications précédentes, dans lequel les réseaux de canaux (224, 225) sont décalés angulairement l'un par rapport à l'autre, dans un plan transversal à l'axe longitudinal A, d'un angle égal à π/ N, où N est le nombre de canaux de chaque réseau de canaux.

## Patentansprüche

1. Geschlossener, lüftergekühlter Motor (202) jener Art, die Folgendes umfasst: eine Welle (204), die eine Längsachse (A) des Motors definiert; im Inneren eines geschlossenen Volumens (218), das axial durch eine erste und eine zweite Querwand und radial durch eine axiale Wand (212) begrenzt ist, die ein Gehäuse (210) des Motors darstellen, einen Stator (206), der fest mit der axialen Wand verbunden ist, und einen Rotor (208), der fest mit der Welle verbunden ist; und, außerhalb des geschlossenen Volumens, (218) ein Netzwerk von Kanälen (224), die an oder in der axialen Wand zirkulieren, und einen Lüfter (222), der an einer Außenseite der ersten Querwand angeordnet ist, der an der Welle montiert ist und der Kühlluft durch das Netzwerk von Kanälen zirkulieren lässt, um den Stator zu kühlen, wobei der Lüfter und das Netzwerk von Kanälen ein erster Lüfter und ein erstes Netzwerk von Kanälen sind, der Motor (202) ferner außerhalb des geschlossenen Volumens (218) ein zweites Netzwerk von Kanälen (223), die an oder in der axialen Wand zirkulieren, und einen zweiten Lüfter (225), der an einer Außenseite der zweiten Querwand angeordnet ist, umfasst, der an der Welle montiert ist und der Kühlluft durch das zweite Netzwerk von Kanälen zirkulieren lässt, um den Stator zu kühlen, **dadurch gekennzeichnet, dass** die erste und die zweite Querwand jeweils durch den ersten und den zweiten Lüfter (222, 223) dargestellt sind, dass die Kanäle des ersten und des zweiten Netzwerks von Kanälen durch den Stator (206) zirkulieren, und dass der Motor in Bezug auf eine Mittelebene (M) quer zu der Achse (A) des Motors symmetrisch ist, um zwei Kühlmittelströme (F1, F2) zu schaffen, die in Längsrichtung durch den Stator (206) in entgegengesetzten Richtungen zirkulieren.

2. Motor nach Anspruch 1, wobei der Motor (202) ferner einen ersten und einen zweiten Flansch (214, 215) umfasst, ein Flansch fest mit der axialen Wand (212) verbunden ist und über Lager (216, 217) mit der Welle (204) gekoppelt ist, wobei sich ein Flansch in Bezug auf das geschlossene Volumen (218) jenseits eines Lüfters befindet und Öffnungen umfasst, um das Ansaugen von Luft durch den Lüfter zu ermöglichen.

3. Motor nach einem der vorherigen Ansprüche, wobei der erste und der zweite Lüfter (222, 223) aus Aluminium sind.

4. Motor nach einem der vorherigen Ansprüche, wobei die Kanäle des ersten und des zweiten Netzwerks von Kanälen (224, 225) axial, entlang der axialen Wand (212), zirkulieren.

5. Motor nach Anspruch 4, wobei die Kanäle des ersten Netzwerks von Kanälen (224) bzw. des zweiten Netzwerks von Kanälen (225) auf der axialen Wand (212) gleichmäßig ringförmig beabstandet sind, wobei jeder Kanal der ersten Kanalanordnung zwischen zwei Kanäle des zweiten Netzwerks von Kanälen eingefügt ist.

6. Motor nach einem der vorherigen Ansprüche, wobei die Netzwerke von Kanälen (224, 225) in einer Ebene winklig in Bezug aufeinander quer zu der Längsachse A um einen Winkel gleich π/ N versetzt sind, wobei N die Anzahl von Kanälen in jedem Netzwerk von Kanälen ist.

## Claims

1. A closed engine cooled by fan (202), of the type comprising: a shaft (204), which defines a longitudinal axis (A) of the engine; inside a closed volume (218) delimited axially by first and second transverse partitions and radially by an axial wall (212) constituting a carcass (210) of the engine, a stator (206), secured to the axial wall, and a rotor (208), secured to the shaft; and, outside the closed volume (218), a network of channels (224), which circulate on or in the axial wall, and a fan (222), which is arranged on an outer side of the first transverse partition, which is mounted on the shaft and which circulates cooling air through the network of channels to cool the stator, the fan and the network of channels being a first fan and a first network of channels, said engine (202) further comprises, outside the closed volume (218), a second network of channels (223), which circulate on or in the axial wall, and a second fan (225), which is arranged on an outer side of the second transverse partition, which is mounted on the shaft and which circulates cooling air in the second network of channels to cool the stator, **characterized in that** the first and second transverse partitions are respectively constituted by the first and second fans (222, 223), **in that** the channels of the first and second networks of channels circulate through the stator (206), and **in that** the engine is symmetrical relative to a median plane (M) transverse to the axis (A) of the engine, so as to create two flows (F1, F2) of coolant that circulate longitudinally through the stator (206) in opposite directions.

2. The engine according to claim 1, wherein the engine (202) further comprises first and second flanges (214, 215), one flange being secured to the axial wall (212) and coupled to the shaft (204) by means of bearings (216, 217), a flange being located beyond a fan with respect to the closed volume (218) and comprising openings so as to allow the suction of air by said fan.

3. The engine according to any one of the preceding claims, wherein the first and second fans (222, 223) are made from aluminum.

4. The engine according to any one of the preceding claims, wherein the channels of the first and second networks of channels (224, 225) circulate axially, along the axial wall (212).

5. The engine according to claim 4, wherein the channels of the first network of channels (224), respectively of the second network of channels (225), are evenly annularly spaced on the axial wall (212), each channel of the first network of channels being inserted between two channels of the second network of channels.

6. The engine according to any one of the preceding claims, wherein the networks of channels (224, 225) are angularly offset from one another, in a plane transverse to the longitudinal axis A, by an angle equal to π/N, where N is the number of channels in each network of channels.
